# EUROPEAN PATENT SPECIFICATION

(11) **EP 3 116 101 B1**
(45) Date of publication and mention of the grant of the patent: **22.04.2020**
(21) Application number: 15758671.0
(22) Date of filing: 04.03.2015
(51) Int. Cl.: H02K 1/26, H02K 23/46, H02K 3/52, H02K 23/38, H02K 23/40, H02K 7/116, H02K 1/24

(54) **ARMATURE CORE, ARMATURE, AND ELECTRIC MOTOR**
ANKERKERN, ANKER UND ELEKTROMOTOR
NOYAU D'INDUIT, INDUIT ET MOTEUR ÉLECTRIQUE

(30) Priority: 05.03.2014 JP 2014042659
(43) Date of publication of application: 11.01.2017
(73) Proprietor: Mitsuba Corporation, Kiryu-shi Gunma 376-8555 (JP)
(72) Inventor: TOKIZAKI, Teppei, Kiryu-shi Gunma 376-8555 (JP); HOSHINO, Akio, Kiryu-shi Gunma 376-8555 (JP); TAMURA, Natsumi, Kiryu-shi Gunma 376-8555 (JP); TAMURA, Satoshi, Kiryu-shi Gunma 376-8555 (JP)
(74) Representative: Cabinet Laurent & Charras
(86) International application number: PCT/JP2015/056345
(87) International publication number: WO 2015/133518

(56) References cited:
- WO-A1-2007/055210
- JP-A- H11 252 843
- JP-A- H11 299 132
- JP-A- 2004 350 450
- JP-A- 2005 269 766
- JP-A- 2005 269 766
- JP-A- 2008 125 277
- JP-A- 2008 236 854
- JP-A- 2008 278 604
- JP-A- 2008 306 816
- JP-A- 2010 045 956
- JP-A- 2010 239 726
- US-A1- 2009 085 422
- US-A1- 2012 313 492

## Description

### Technical Field

The present invention relates to an armature core where a plurality of coils are wound on each tooth, an armature where a plurality of coils are wound on the armature core, and an electric motor using the armature.

### Background Art

For example, a DC motor with a brush, in which motor magnets are disposed on the inner peripheral surface of a bottomed cylindrical yoke and an armature is rotatably provided on the inside of the motor magnets in a radial direction, is known as an electric motor (for example, see Japanese Unexamined Patent Application, Publication No. 2007-228754).

The armature includes an armature core, armature coils, and a commutator. The armature core includes a plurality of teeth that are provided on the outer periphery of an annular core body externally fitted and fixed to a rotating shaft and radially extend outward in the radial direction. The armature coil is wound on each tooth of the armature core via a slot between the teeth. The commutator is provided on the rotating shaft so as to rotate integrally with the armature core.

The commutator includes a plurality of segments that are disposed side by side in a circumferential direction in a state in which the segments are insulated from each other. Terminal portions of the respective armature coils are connected to these segments. Further, a plurality of brushes come into sliding contact with the segments. When DC current is supplied to each armature coil through the segment by the brushes, the armature and the rotating shaft are rotated by a magnetic attractive force or a repelling force that is generated between a magnetic field formed on the armature core and the motor magnets. Since the segments with which the brushes come into sliding contact are sequentially changed by the rotation of the armature and the rotating shaft, the switching of the direction of current flowing in the armature coil, that is, so-called rectification is performed. As a result, the armature is continuously rotated and a rotational output is taken out of the rotating shaft.

Incidentally, when the commutator rotates, the brushes repeatedly come into contact with the segments and are repeatedly separated from the segments. For this reason, when a voltage between the segments is high, electric discharge may be generated at the time of the separation of the brushes from the segments. As means for preventing this, there is, for example, a method that sets the number of the segments of the commutator to two or three times the number of the teeth of the armature core and lowers the voltage between the segments. In such a case, a plurality of winding wires are used to form a plurality of coils on each tooth of the armature core.

Here, in a case in which a plurality of coils are wound on each tooth, the coils are sequentially wound. For example, a second coil is wound after a first coil is wound. In a case in which there is a third coil, the third coil is wound after the second coil is wound. In this case, the second (second-layer) coil is wound such that at least a part of the second (second-layer) coil overlaps the first (first-layer) coil.

Documents US 2009/085422 A1, US 2012/313492 A1, and JP 2010 045956 A disclose electric motors with particular winding solutions with regulating portions for regulation of the positional deviation of winding wires which nevertheless are not satisfactory.

Document JP 2005 0269766 A discloses a rotary armature connected to a commutator, the teeth of the armature being foreseen with corrugated winding surfaces.

### Summary of Invention

### Technical Problem

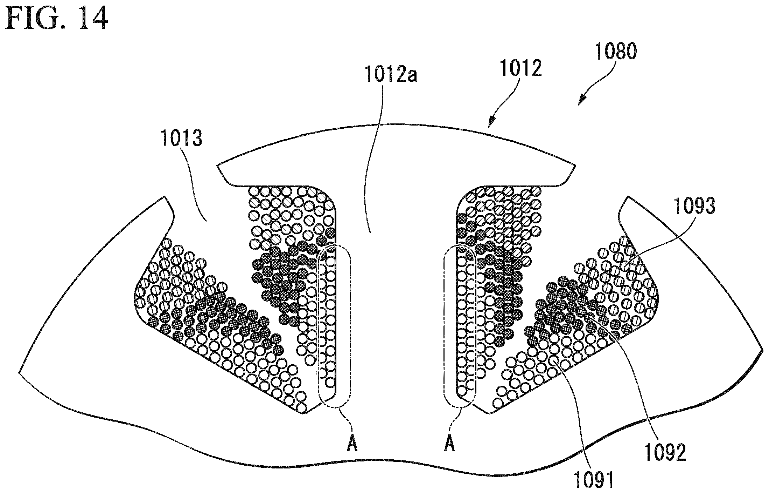

When the coil wound on the lower side slides due to the coil wound on the upper side, the slack of the lower coil can be caused. For this reason, winding collapse may be caused. FIG. 14 shows an example of the winding collapse.

In FIG. 14, a first coil 1091 is wound on the winding surface of a winding drum portion 1012a of a tooth 1012, a second coil 1092 is wound over the first coil 1091, and a third coil 1093 is wound over the second coil 1092. However, when slack (a portion denoted by A in FIG. 14) occurs on the lowermost side of the first coil 1091, winding collapse is caused over all the coils. Since a winding space in a slot 1013 is reduced when the winding collapse is caused, and a coil space factor of a winding wire which can be wound is reduced. Further, there is a possibility that the balance of an armature 1080 may deteriorate when the arrangement of each coil on each tooth 1012 becomes non-uniform.

The invention provides an armature comprising an armature core that can prevent the winding collapse, namely of coils when a plurality of coils are wound on teeth and an electric motor using the armature.

### Solution to Problem

The present invention is an armature as defined in claim 1.

According to the armature, the positional deviation of the winding wire of the lowermost side of the first-layer coil in the extending direction of the tooth can be regulated by the regulating portion. Accordingly, it is possible to prevent the winding collapse from being caused by the slack of the first-layer coil that occurs due to the sliding of the first-layer coil, which has been previously wound on the lower side, caused by the second-layer coil wound on the upper side of the first-layer coil. Therefore, since it is possible to increase a winding space in the slot of the armature core, it is possible to improve a coil space factor. Further, since the arrangement of the respective coils of each tooth can be uniformized through the prevention of the winding collapse of the coils, the balance of the armature can be improved.

The regulating portion can be provided on at least one side surface of both side surfaces of the winding drum portion in a width direction when seen in an axial direction of the core body.

According to the above-mentioned structure, in a case in which the armature core is formed of a laminated body including a plurality of core plates having the same shape, it is possible to form the regulating portions in a state in which the armature core is formed of the laminated body, by only adding shape to be the regulating portion to corresponding portions of each core plate. Accordingly, it is possible to easily form the regulating portions.

The regulating portion is formed in the middle of the winding drum portion in the extending direction or on an inner side of the middle of the winding drum portion in the extending direction.

According to the above-mentioned structure, the winding wire of the lowermost side of the first-layer coil is reliably held at an appropriate position by the position of the step.

The regulating portion is formed of a step that is provided at an end part of an outer side of the winding surface for the first-layer coil in the extending direction; and with the step as a boundary, a height of the winding surface for the first-layer coil on an inner side in the extending direction is set to be lower than a height of the winding surface on an outer side in the extending direction.

According to the above-mentioned structure, among the winding wires of the lowermost side of the first-layer coil wound on the winding surface for the first-layer coil of the inner side in the radial direction so as to come into close contact with the winding surface for the first-layer coil, the position of the winding wire which comes into contact with the step is regulated by the step. So, other winding wires coming into contact with the step are not moved towards the outer side in the extending direction of the winding drum portion. Accordingly, the positional deviation of the other winding wires of the lowermost side is not caused. Therefore, the positional deviation of the winding wires, which are wound on the upper side of the winding wires of the lowermost side, is also not caused. As a result, since it is possible to wind the second or later-layer coil without causing the slack or winding collapse of the first-layer coil, the winding state of the coils is stable.

A difference in height of the step can be set to be equal to or larger than the radius of the winding wire that forms the coil.

According to the above-mentioned structure, according to the armature core, the winding wire of the lowermost side of the first-layer coil is reliably held at an appropriate position by the height of the step.

In a comparative example not belonging to the invention, the regulating portion can be a concave portion to which the winding wire forming the coil is fitted and which is formed at the end part of the outer side of the winding surface for the first-layer coil in the extending direction; and a depth of the concave portion is set to be equal to or smaller than a radius of the winding wire.

According to this comparative example, when the winding wire is fitted to the concave portion that is formed on the winding surface, the winding wire itself serves a role of the step. Accordingly, it is possible to prevent the positional deviation of the winding wire of the lowermost side of the first-layer coil.

In the armature according to the invention a plurality of coils are sequentially wound in a concentrated winding manner on the winding drum portion of each tooth of the armature core and a second or later-layer coil is wound so that at least a part of the second or later-layer coil overlaps a first-layer coil after the first-layer coil is wound so that a winding wire of a lowermost side comes into close contact with the winding surface of the winding drum portion.

According to the above-mentioned structure, since the armature includes the above-mentioned armature core, it is possible to effectively prevent the winding collapse of the coils. Accordingly, it is possible to improve the coil space factor and to improve balance.

The present invention is also an electric motor including the armature as defined by the appended claims and a magnet that generates a magnetic attractive force or a repelling force with respect to a magnetic field formed by the armature.

According to the above-mentioned structure, it is possible to provide a high-quality electric motor having a high coil space factor.

### Advantageous Effects of Invention

With the proposed armature and the electric motor, it is possible to prevent the winding collapse of coils in a case in which a plurality of coils are wound on each tooth. Accordingly, it is possible to improve the coil space factor of the armature and to improve the balance of the armature.

### Brief Description of Drawings

FIG. 1 is a side view showing the appearance of a motor with a speed reducer of a first embodiment of the invention.
FIG. 2 is a longitudinal sectional view of the motor with a speed reducer of the first embodiment of the invention.
FIG. 3 is a side view of an armature of the first embodiment of the invention.
FIG. 4A is a view showing an armature core of the first embodiment of the invention and is a view showing the armature core in an axial direction (corresponding to a plan view of a core plate).
FIG. 4B is a view showing the armature core of the first embodiment of the invention and is an enlarged view of a portion B of FIG. 4A.
FIG. 5 is a partial cross-sectional view of the armature of the first embodiment of the invention.
FIG. 6 is a development view of the armature of the first embodiment of the invention.
FIG. 7 is a development view of an armature of a first modification of the first embodiment of the invention.
FIG. 8 is a development view of an armature of a second modification of the first embodiment of the invention.
FIG. 9 is a view showing an armature core of a comparative example not belonging to the invention, in an axial direction (corresponding to a plan view of a core plate).
FIG. 10A is a view showing an armature core of a comparative example not belonging to the invention, and is a view showing the armature core in an axial direction.
FIG. 10B is a view showing the armature core of the example and is an enlarged view of a portion C of FIG. 10A.
FIG. 11 is a view showing an armature core of a second embodiment of the invention in an axial direction (corresponding to a plan view of a core plate).
FIG. 12 is a partial plan view of an armature core of a comparative example not belonging to the invention that is seen in an axial direction (corresponding to a plan view of a core plate).
FIG. 13 is a partial sectional view of an armature core of a comparative example not belonging to the invention that is seen in an axial direction (corresponding to a plan view of a core plate).
FIG. 14 is a partial sectional view of an armature in the related art.

### Description of Embodiments

### (First embodiment)

### (Motor with speed reducer)

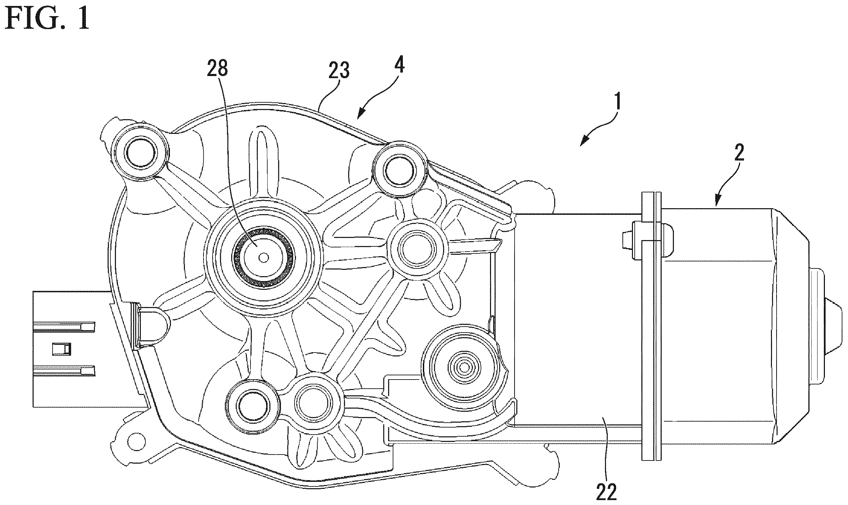

Next, a first embodiment of the invention will be described with reference to FIGS. 1 to 6.

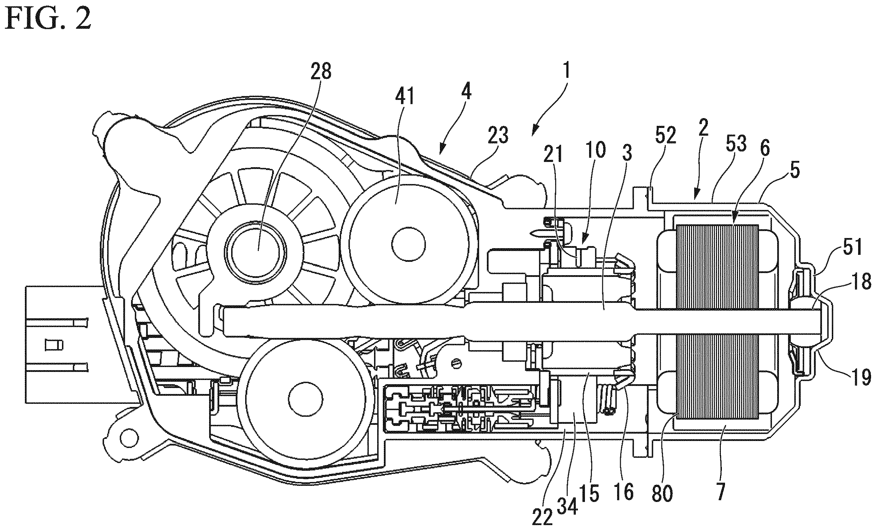

FIG. 1 is a side view showing the appearance of a motor with a speed reducer to which an electric motor including an armature core according to the invention is applied. FIG. 2 is a longitudinal sectional view of the motor with a speed reducer.

As shown in FIGS. 1 and 2, a motor 1 with a speed reducer is used to drive, for example, windshield wipers of an automobile, and includes an electric motor 2 and a speed reduction mechanism 4 that is connected to a rotating shaft 3 of the electric motor 2. The electric motor 2 includes a yoke 5 that also functions as a bottomed cylindrical motor housing and an armature 6 that is rotatably provided in the yoke 5.

A cylinder portion 53 of the yoke 5 is formed in a substantially cylindrical shape, and four segment-type magnets 7 are provided on the inner peripheral surface of the cylinder portion 53. Meanwhile, the magnets 7 are not limited to segment-type magnets and a ring-shaped magnet may be used.

A bearing housing 19, which protrudes outward in an axial direction, is formed at a radially central portion of a bottom wall (an end part) 51 of the yoke 5, and a sliding bearing 18, by which one end of the rotating shaft 3 is rotatably supported, is provided in the bearing housing 19. The sliding bearing 18 has a function to align the rotating shaft 3.

An outer flange 52 is provided at an opening of the cylinder portion 53, and an end part of a gear housing 23 of the speed reduction mechanism 4 is fixed to the outer flange 52. Accordingly, the electric motor 2 and the speed reduction mechanism 4 are integrally connected to each other.

### (Armature)

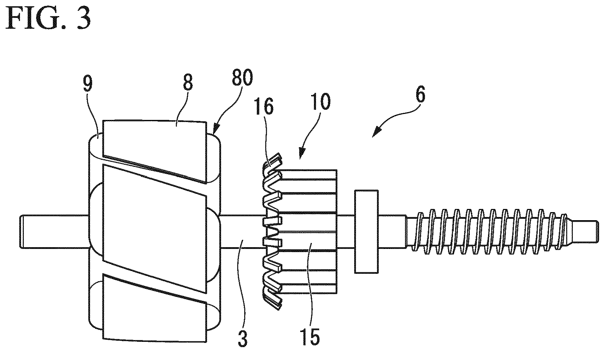

FIG. 3 is a side view showing the appearance of the armature.

As shown in FIGS. 2 and 3, the armature 6 includes an armature body 80 that is externally fitted and fixed to the rotating shaft 3, and a commutator 10 that is disposed at the other end side of the rotating shaft 3 (the speed reduction mechanism 4 side of the rotating shaft 3).

The armature body 80 includes an armature core 8 and an armature coil 9 that is wound on the armature core 8. The armature core 8 is formed of a laminated core in which core plates punched by pressing or the like and made of a magnetic material are laminated in the axial direction. Meanwhile, a dust core, which is press-molded with soft magnetic powder, can also be used as the armature core 8.

### (Armature core)

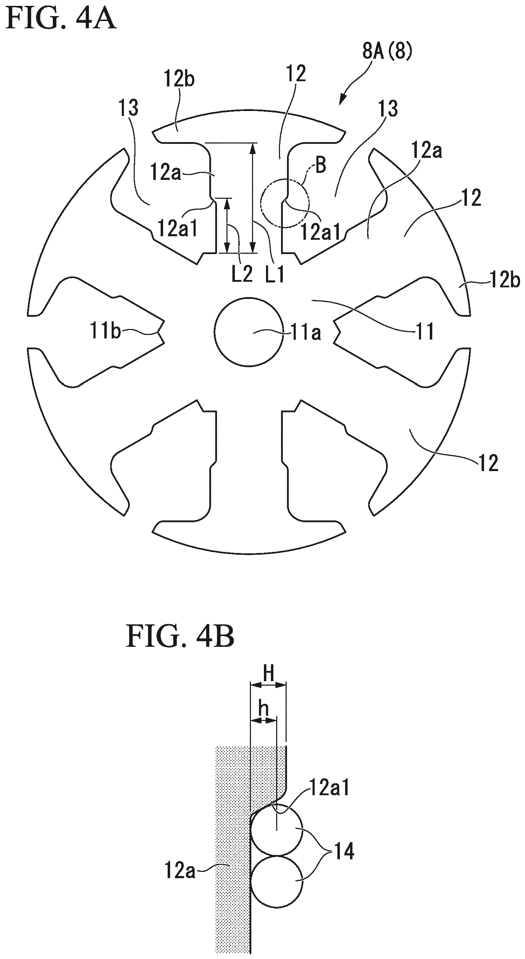

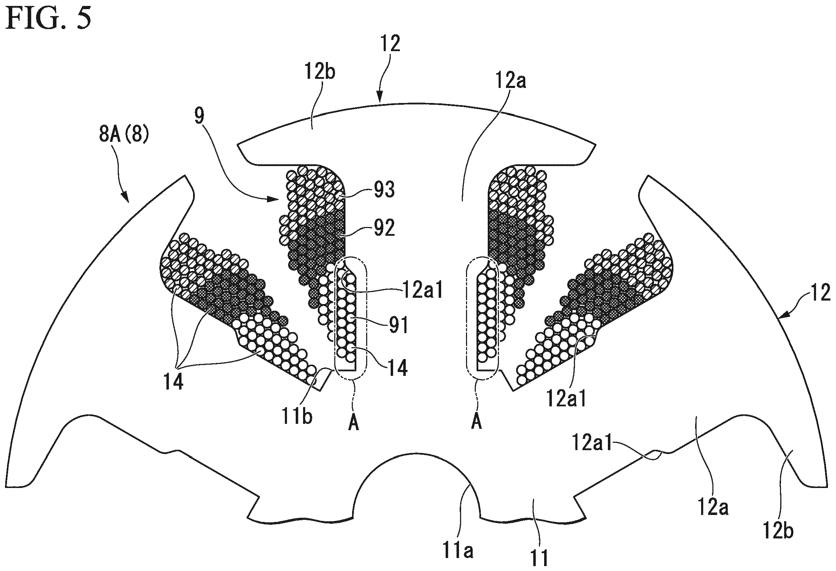

FIG. 4A is a view showing the armature core in the axial direction and is also a view showing the planar shape of one core plate. FIG. 4B is an enlarged view showing a portion B of FIG. 4A together with a coil. Further, FIG. 5 is a partially enlarged cross-sectional view of the armature core on which winding wires are wound.

Here, terms about directions to be used will be defined below. First, an "axial direction" is the axial direction of the armature 6, that is, the axial direction of the rotating shaft 3. A "radial direction" is the radial direction of the armature 6. "Inner side in the radial direction" is the side facing the rotating shaft 3 in the radial direction of the armature 6, and "outer side in the radial direction" is the side opposite thereto. Further, a "circumferential direction" is the circumferential direction of the armature 6 and is the circumferential direction of the rotating shaft 3.

Furthermore, in a case of describing armature cores irrespective of a small difference in the shape, the armature cores are denoted by common reference numeral "8". In a case of describing armature cores of embodiments by distinguishing from each other through a small difference in the shape, each armature core is denoted by common reference numeral "8" and an alphabet written in capital added thereto.

### (Armature core)

As shown in FIG. 4A, an armature core 8A (8) of the first embodiment includes an annular core body 11. A through hole 11a into which the rotating shaft 3 is press-fitted is formed at the center of the core body 11. Further, six teeth 12 are radially provided on the outer peripheral portion of the core body 11 at regular intervals in the circumferential direction. Each of the teeth 12 is formed in a substantially T shape in a plan view when seen in the axial direction. Each of the teeth 12 includes a winding drum portion 12a that radially protrudes from the core body 11 in the radial direction, and a flange portion 12b that extends from the end of the winding drum portion 12a in the circumferential direction and forms the outer periphery of the armature core 8A.

According to this structure, six slots 13 are formed among adjacent teeth 12. Further, winding wires 14 coated with enamel pass through these slots 13 and the winding wires 14 are wound on the outer peripheries of the winding drum portions 12a of the teeth 12 in a concentrated winding manner as shown in FIG. 5, so that the armature coil 9 is formed (the detail of a method of forming the armature coil 9 will be described below).

### (Armature coil)

In this case, as shown in FIG. 5, three coils 91, 92, and 93, which form the armature coil 9, are sequentially wound on the outer periphery of the winding drum portion 12a of each of the teeth 12 in a concentrated winding manner. First, the winding wires 14, which form the first coil 91, are wound on the teeth 12 as a first layer. Over that, the winding wires 14, which form the second coil 92, are wound on the teeth 12 as a second layer. Finally, the winding wires 14, which form the third coil 93, are wound on the teeth 12 as a third layer. Meanwhile, before the coils 91, 92, and 93 are wound, each of the core plates of the armature core 8A is coated with powder, such as an epoxy resin. Accordingly, an insulating film is formed on the surface of each of the core plates. Accordingly, an insulator formed of a resin molding, which is a separate component, is not used.

### (Three coils)

The above-mentioned first-layer coil 91 is formed by winding the winding wires 14 on the winding surfaces of the inner side of the winding drum portion 12a of each of the teeth 12 in the radial direction (an extending direction). Further, the second-layer coil 92 is formed by winding the winding wires 14 over the first-layer coil 91 which is previously woundat a position closer to the outside in the radial direction so as to partially overlap the first-layer coil 91. Furthermore, the third-layer coil 93 is formed by winding the winding wires 14 further over the second-layer coil 92 which is previously woundat a position even closer to the outside in the radial direction so as to partially overlap the second-layer coil 92. Here, the first-layer coil 91 is wound in a state in which the winding wires 14 of lowermost sides of the first-layer coil 91 come into close contact with base end parts of the winding surfaces of the winding drum portion 12a.

When the winding wires 14 forming the respective coils 91, 92, and 93 are sequentially wound in this way, the winding wires 14 of the first-layer coil 91 slide on the winding drum portion 12a due to a force generated while winding the second-layer coil 92 on the first-layer coil 91 as described above and cause the slack. For this reason, there is a concern that winding collapse may occur on all the coils.

### (Regulating portion)

Here, in the armature core 8A of this embodiment, as shown in FIGS. 4A and 5, a regulating portion 12a1 is provided on at least a part of the winding surfaces for the first-layer coil 91 that are formed on the outer periphery of the winding drum portion 12a. The regulating portion 12a1 regulates the positional deviation of the winding wires 14 of the lowermost side of the first-layer coil 91 in the radial direction. Since the winding drum portion 12a of each of the teeth 12 has a rectangular cross-sectional shape, the regulating portion 12a1 may be provided on the winding surface corresponding to at least one side of the rectangular cross-sectional shape (one of four winding surfaces). However, here, considerating that the armature core 8A is a laminated core, when seen in the axial direction, the regulating portions 12a1 are provided on both side surfaces of the winding drum portion 12a in a width direction among the four winding surfaces corresponding to the four sides of the rectangular cross-sectional shape. Meanwhile, the regulating portions 12a1 are provided so as to be continued in the axial direction.

### (Step as regulating portion)

The regulating portion 12a1 of the armature core 8A of this embodiment is formed by a step 12a1 (that is denoted by the same reference numeral as the regulating portion) that is provided at an end part of the outer side of the winding surface for the first-layer coil 91 in the radial direction. Further, with the step 12a1 as a boundary, a height of the winding surface for the first-layer coil 91 on an inner side in the radial direction is set to be lower than a height of the winding surface for other coils 92 and 93 on an outer side in the radial direction. That is, the step 12a1 is formed by changing the width dimension of the tooth 12.

As shown in FIG. 4A, the length L2 of the winding surface for the first-layer coil 91, on which the step 12a1 is provided, in the extending direction of the tooth 12 (the winding drum portion 12a) is set to a half or less of the length L1 of the entire winding surface in the extending direction of the tooth 12. In other words, the step 12a1 is formed in the middle of the tooth 12 (the winding drum portion 12a) in the extending direction or on an inner side of the middle of the tooth 12 in the extending direction.

Further, as shown in FIG. 4B, the height (a difference in height) H of the step 12a1 is set to be equal to or larger than the radius h of the winding wire 14 that forms the coil 91.

### (Effect of step)

Since the armature core 8A is formed as described above, it is possible to form the armature coil 9, which includes three coils 91, 92, and 93 without winding collapse, by sequentially winding the winding wires 14 of the first coil 91, the winding wires 14 of the second coil 92, and the winding wires 14 of the third coil 93 on the winding drum portion 12a of each of the teeth 12 of the armature core 8A.

That is, as shown in FIG. 5, the winding wires 14 of the first-layer first coil 91 are wound so as to come into close contact with the winding surfaces of the inner side in the radial direction of the drum part 12a of the tooth 12. In this case, the position of the winding wire 14, which comes into direct contact with the step 12a1, among the winding wires 14 of the lowermost side of the first-layer coil 91 is regulated by the step 12a1 so that the winding wire 14 is not moved towards the outside in the radial direction. Further, the positions of the other winding wires 14 of the lowermost side are also regulated so as to follow the position of the winding wire 14 in the same way.

Then, after the first-layer coil 91 is wound, the second layer coil 92 and the third-layer coil 93 are sequentially wound while partially overlapping the coil that is positioned therebeneath. As a result, the armature coil 9 is completed. In this case, even when the second-layer coil 92 or the third-layer coil 93 is wound, the positions of the winding wires 14 of the lowermost side of the first-layer coil 91 are regulated by the step 12a1. For this reason, since the slack of the winding wires 14 by the sliding of the winding wire 14 is not caused and the winding collapse of all the coils will not occur, thus the winding states of the coils 91, 92, and 93 are stable. As a result, since a winding space in the slots 13 of the armature core 8A is increased, a coil space factor is improved. Further, since the arrangement of the respective coils 91, 92, and 93 of each tooth 12 is uniformized through the prevention of the winding collapse of the coils 91, 92, and 93, the balance of the armature 6 can be improved.

Furthermore, in a case in which the steps 12a1 as the regulating portions are formed on both side surfaces of each tooth 12 in the width direction, it is possible to easily form the regulating portions by only adding the steps 12a1 to be the regulating portions, to corresponding portions of each of the core plates that form the armature core 8A. Moreover, it is possible to reliably hold the winding wires 14 of the lowermost side of the first-layer coil 91 at appropriate positions, that is, to prevent the winding wires 14 of the lowermost side of the first-layer coil 91 from getting onto the step 12a1 by the setting of a position where the step 12a1 is to be provided (the position regulated by the length L2) or a difference H in height. For this reason, it is possible to reliably prevent the winding collapse of the coils 91, 92, and 93.

### (Commutator)

Next, another structure of the armature will be described.

As shown in FIGS. 2 and 3, eighteen segments 15, which are made of a conductive material, are mounted on the outer peripheral surface of the commutator 10 that is externally fitted and fixed to a side of the rotating shaft 3 closer to the other end side of the rotating shaft 3 (the speed reduction mechanism 4 side of the rotating shaft 3) than the armature core 8. The segment 15 is formed of a plate-like metal piece that is long in the axial direction. The segments 15 are fixed in parallel at regular intervals in the circumferential direction in a state in which the segments 15 are insulated from each other. As described above, the electric motor 2 is formed as a so-called 4-pole, 6-slot, 18-segment electric motor of which the number of magnetic poles is set to four, the number of slots 13 is set to six, and the number of segments 15 is set to eighteen.

Further, a riser 16, which is bent so as to be folded back toward the outer diameter side, is molded integrally with an end part of each segment 15 facing the armature core 8. Terminal portions of the armature coil 9 are wound around the risers 16 and are fixed to the risers 16 by fusing or the like. Accordingly, the segment 15 and the armature coil 9 corresponding thereto are electrically connected to each other.

Furthermore, connecting wires 17 (to be described below) are wound around the risers 16 corresponding to the segments 15 having the same electric potential, and the connecting wires 17 are fixed to the risers 16 by fusing. The connecting wires 17 are used to allow the segments 15, which have the same electric potential, to short-circuit. The connecting wires 17 are routed between the commutator 10 and the armature core 8.

As shown in FIG. 1, the commutator 10 having the above-mentioned structure faces the gear housing 23 of the speed reduction mechanism 4. A gear group 41 of the speed reduction mechanism 4 is housed in the gear housing 23. Further, a brush housing portion 22 is molded integrally with the side of the gear housing 23 facing the electric motor 2. The commutator 10 of the electric motor 2 faces the brush housing portion 22.

A brush 21 is housed in the brush housing portion 22 so as to freely protrude/recede through a holder stay or a brush holder (not shown). The brush 21 is used to supply power from an external power source (for example, a battery mounted on an automobile, or the like) to the commutator 10. The brush 21 is biased toward the commutator 10 by a spring (not shown), and an end of the brush 21 comes into sliding contact with the segments 15.

### (Method of forming armature coil)

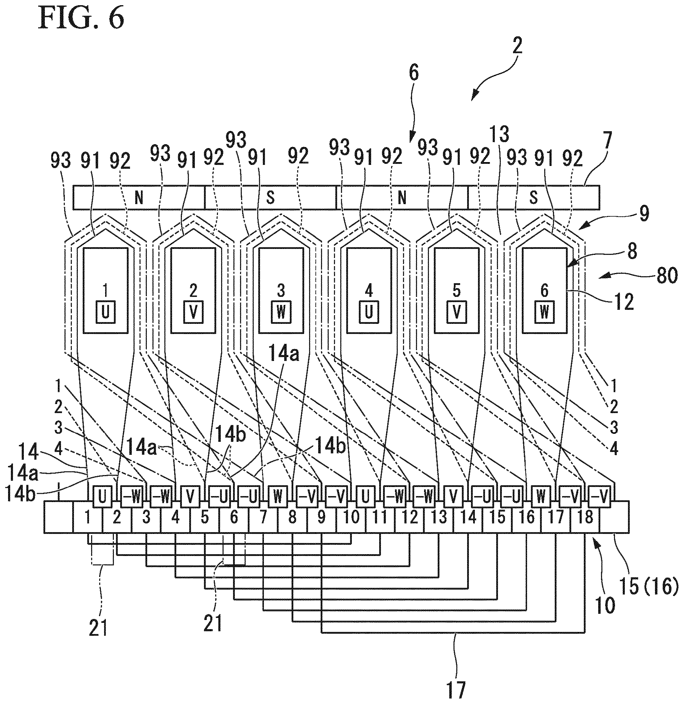

Next, an example of a method of forming the armature coil 9 will be described with reference to FIG. 6.

FIG. 6 is a development view of the armature. A gap between the adjacent teeth corresponds to the slot. Meanwhile, each segment 15, each tooth 12, and the formed armature coil 9 will be described while being denoted by reference numerals in FIG. 6.

As shown in FIG. 6, a U phase, a V phase, and a W phase are assigned to each tooth 12 in this order in the circumferential direction. That is, the first tooth 12 and the fourth tooth 12 correspond to a U phase, the second tooth 12 and the fifth tooth 12 correspond to a V phase, and the third tooth 12 and the sixth tooth 12 correspond to a W phase. Here, among the numbers given to the segments 15, the position corresponding to the first is regarded as a position corresponding to the first tooth 12.

Meanwhile, in FIG. 6, a direction in which the winding wire 14 is wound on each tooth 12 clockwise will be described as a forward direction and a direction in which the winding wire 14 is wound on each tooth 12 counterclockwise will be described as a reverse direction.

First, for example, in a case in which a winding start end 14a of the winding wire 14 starts to be wound from the first segment 15, the winding wire 14 is led into the slot 13 between the first and sixth teeth 12 existing near the first segment 15. Further, in a case in which the winding wire 14 is wound on each of the teeth 12 n times (n is a natural number and a multiple of 3), the winding wire 14 is wound on the first tooth 12 n/3 times in the forward direction in a concentrated winding manner.

Subsequently, the winding wire 14 is led out of the slot 13 between the first and second teeth 12, and is wound around the riser 16 of the second segment 15 adjacent to the first segment 15. Then, a winding terminal end 14b is connected to the second segment 15. Accordingly, a U-phase first coil 91, which is wound on the first tooth 12 in the forward direction, is formed between the first and second segments 15.

Further, the winding wire 14 of which the winding start end 14a is wound around the riser 16 of the fifth segment 15 is led into the slot 13 between the first and second teeth 12. Then, the winding wire 14 is wound on the first tooth 12 n/3 times in the reverse direction in a concentrated winding manner.

Subsequently, the winding wire 14 is led out of the slot 13 between the first and sixth teeth 12, and is wound around the riser 16 of the sixth segment 15 adjacent to the fifth segment 15. Then, the winding terminal end 14b is connected to the sixth segment 15. Accordingly, a "-U"-phase second coil 92, which is wound on the first tooth 12 in the reverse direction, is formed between the fifth and sixth segments 15.

In addition, the winding wire 14 of which the winding start end 14a is wound around the riser 16 of the sixth segment 15 is led into the slot 13 between the first and second teeth 12. Then, the winding wire 14 is wound on the first tooth 12 n/3 times in the reverse direction in a concentrated winding manner.

Subsequently, the winding wire 14 is led out of the slot 13 between the first and sixth teeth 12, and is wound around the riser 16 of the seventh segment 15 adjacent to the sixth segment 15. Then, the winding terminal end 14b is connected to the seventh segment 15. Accordingly, a "-U"-phase third coil 93, which is wound on the first tooth 12 in the reverse direction, is formed between the sixth and seventh segments 15.

Therefore, an n-time winding armature coil 9, which includes the U-phase first coil 91, the "-U"-phase second coil 92, and the "-U"-phase third coil 93, is formed on the first tooth 12 corresponding to a U phase. The U-phase first coil 91 is formed of the winding wire 14 that is wound n/3 times in the forward direction; and the "-U"-phase second coil 92 and the "-U"-phase third coil 93 are formed of the winding wires 14 that are wound n/3 times in the reverse direction.

Then, when this is sequentially performed between the segments 15 corresponding to the respective phases, the armature coil 9 having a 3-phase structure including the first coil 91, the second coil 92, and the third coil 93 is formed on the armature core 8. Accordingly, the coils 91 to 93, which correspond to a U phase, a "-W" phase, a "-W" phase, a V phase, a "-U" phase, a "-U" phase, a W phase, a "-V" phase, and a "-V" phase, are electrically and sequentially connected in this order between the adjacent segments 15.

Meanwhile, at portions where the winding start end 14a and the winding terminal end 14b of the winding wire 14, which forms the coils 91 to 93 corresponding to the respective phases, are connected to the segments 15, the coils 91 to 93, which correspond to a U phase, a "-W" phase, a "-W" phase, a V phase, a "-U" phase, a "-U" phase, a W phase, a "-V" phase, and a "-V" phase, may be electrically and sequentially connected in this order between the adjacent segments 15.

### (Operation of electric motor)

Next, the operation of the electric motor 2 will be described with reference to FIG. 6.

For example, a case in which a brush 21 is disposed between the first and second segments 15 and a brush 21 is disposed on the sixth segment 15 as shown in FIG. 6 and a voltage is applied between the two brushes 21 will be described in regard to the description of the operation of the electric motor 2.

In this case, the U-phase first coil 91 short-circuits. Then, current flows in the "-U"-phase second coil 92 in the reverse direction (a counterclockwise direction in FIG. 6), and current flows in the "-U"-phase third coil 93 in the forward direction (a clockwise direction in FIG. 6). That is, since the direction of current flowing in the second coil 92 and the direction of current flowing in the third coil 93 are opposite to each other, a magnetic field is cancelled and torque is not generated with the magnet 7.

In contrast, current flows in the V-phase first coil 91, the "-V"-phase second coil 92, and the "-V"-phase third coil 93 in the forward direction. Further, current flows in the "-W"-phase first coil 91, the "-W"-phase second coil 92, and the "-W"-phase third coil 93 in the reverse direction.

Accordingly, a magnetic field is formed on each of the second, third, fifth, and sixth teeth 12. The directions of these magnetic fields are in series in the circumferential direction. For this reason, a magnetic attractive force or a repelling force between the magnetic field formed on each tooth 12 and the motor magnet 7 acts in the same direction at symmetrical positions with respect to the rotating shaft 3 as a center. Then, the rotating shaft 3 is rotated by the magnetic attractive force or the repelling force.

Additionally, in the description of the operation of the above-mentioned electric motor 2, it is also possible to rotate the rotating shaft 3 at a high speed by the advance of the brush 21 that is disposed between the first and second segments 15.

### (First modification)

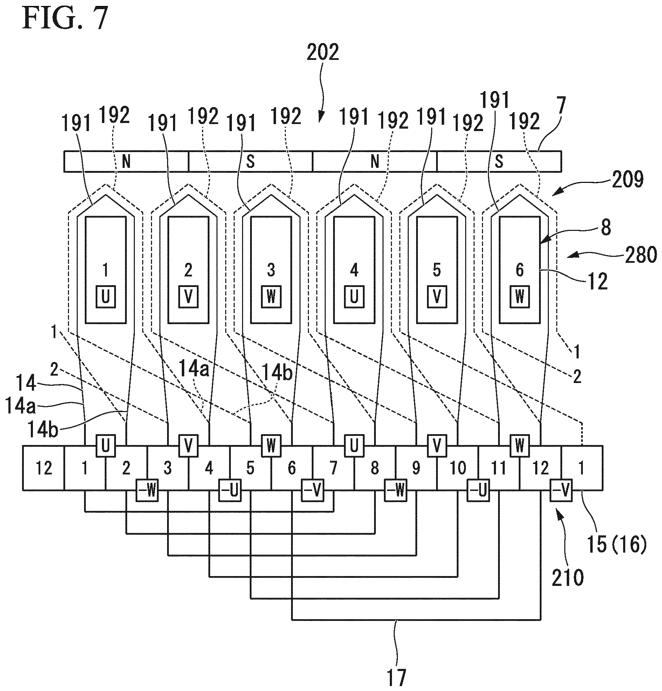

FIG. 7 is a development view of an armature of a first modification of the first embodiment.

As shown in FIG. 6, eighteen segments 15 are mounted on the commutator 10 of the first embodiment. In contrast, twelve segments 15 (of which the number is twice the number of the teeth 12) are mounted on a commutator 210 of the first modification. In this regard, the first modification is different from the above-mentioned first embodiment. That is, an electric motor 202 of this modification is formed of a so-called 4-pole, 6-slot, 12-segment electric motor of which the number of magnetic poles is set to four, the number of slots 13 is set to six, and the number of segments 15 is set to twelve.

Further, the armature coil 9 having a 3-phase structure including three coils 91 to 93, that is, the first coil 91, the second coil 92, and the third coil 93 is formed on the armature core 8 that forms the armature of the first embodiment. In contrast, an armature coil 209 having a 3-phase structure including two coils, that is, a first coil 91 and a second coil 92 is formed on an armature core 8 that forms an armature of the first modification. In this regard, the first modification is different from the above-mentioned first embodiment.

### (Method of forming armature coil)

An example of a method of forming the armature coil 209 will be described with reference to FIG. 7.

As shown in FIG. 7, a U phase, a V phase, and a W phase are assigned to each tooth 12 in this order in the circumferential direction. That is, the first tooth 12 and the fourth tooth 12 correspond to a U phase, the second tooth 12 and the fifth tooth 12 correspond to a V phase, and the third tooth 12 and the sixth tooth 12 correspond to a W phase. Here, among the numbers given to the segments 15, the position corresponding to the first is a position corresponding to the first tooth 12. Further, the segments 15, which have the same electric potential, are short-circuited by connecting wires 17. Meanwhile, in FIG. 7, a direction in which the winding wire 14 is wound on each tooth 12 clockwise will be described as a forward direction and a direction in which the winding wire 14 is wound on each tooth 12 counterclockwise will be described as a reverse direction.

First, for example, in a case in which a winding start end 14a of the winding wire 14 starts to be wound from the first segment 15, the winding wire 14 is led into the slot 13 between the first and sixth teeth 12 existing near the first segment 15. Further, in a case in which the winding wire 14 is wound on each of the teeth 12 n times (n is a natural number and a multiple of 2), the winding wire 14 is wound on the first tooth 12 n/2 times in the forward direction in a concentrated winding manner.

Subsequently, the winding wire 14 is led out of the slot 13 between the first and second teeth 12, and is wound around the riser 16 of the second segment 15 adjacent to the first segment 15. Then, a winding terminal end 14b is connected to the second segment 15. Accordingly, a U-phase first coil 291, which is wound on the first tooth 12 in the forward direction, is formed between the first and second segments 15.

Further, the winding wire 14 of which the winding start end 14a is wound around the riser 16 of the fourth segment 15 is led into the slot 13 between the first and second teeth 12. Then, the winding wire 14 is wound on the first tooth 12 n/2 times in the reverse direction in a concentrated winding manner.

Subsequently, the winding wire 14 is led out of the slot 13 between the first and sixth teeth 12, and is wound around the riser 16 of the fifth segment 15 adjacent to the fourth segment 15. Then, the winding terminal end 14b is connected to the fifth segment 15. Accordingly, a "-U"-phase second coil 292, which is wound on the first tooth 12 in the reverse direction, is formed between the fourth and fifth segments 15.

Therefore, an n-time winding armature coil 209, which includes the U-phase first coil 91 and the "-U"-phase second coil 92, is formed on the first tooth 12 corresponding to a U phase. The U-phase first coil 91 is formed of the winding wire 14 that is wound n/2 times in the forward direction; and the "-U"-phase second coil 92 is formed of the winding wire 14 that is wound n/2 times in the reverse direction.

Then, when this is sequentially performed between the segments 15 corresponding to the respective phases, the armature coil 209 having a 3-phase structure including the first coil 91 and the coil 292 is formed on the armature core 8. Accordingly, the coils 91 and 92, which correspond to a U phase, a "-W" phase, a V phase, a "-U" phase, a W phase, and a "-V" phase, are electrically and sequentially connected in this order between the adjacent segments 15.

Meanwhile, at portions where the winding start end 14a and the winding terminal end 14b of the winding wire 14, which forms the coils 91 and 92 corresponding to the respective phases, are connected to the segments 15, the coils 91 and 92, which correspond to a U phase, a "-W" phase, a V phase, a "-U" phase, a W phase, and a "-V" phase, may be electrically and sequentially connected in this order between the adjacent segments 15.

### (Second modification)

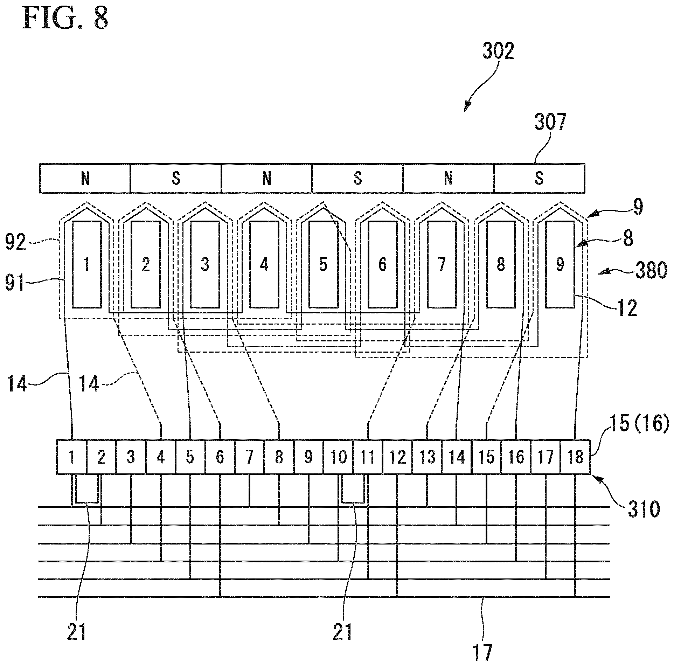

FIG. 8 is a development view of an armature of a second modification of the first embodiment.

The number of magnetic poles has been four (the number of the pairs of magnetic poles has been two) in the first modification. In contrast, as shown in FIG. 8, the number of magnetic poles is six (the number of the pairs of magnetic poles is three) in the second modification. Further, the number of teeth 12 of an armature core 8, which has been six, is changed to nine. Furthermore, the number of segments 15 of a commutator 310, which has been twelve, is changed to eighteen. In this regard, the second modification is different from the above-mentioned first modification. The first coil 91 and the second coil 92 are sequentially wound on each tooth 12.

Further, in the second modification, the winding wire 14 is continuously wound on the teeth 12 corresponding to the same phase. In this regard, the above-mentioned first modification and the second modification are different from each other. That is, in the second modification, the winding wire 14, which is wound on one tooth 12, is not connected to the segment 15 and is wound on the teeth 12 corresponding to the same phase (for example, the first tooth 12, the fourth tooth 12, and the seventh tooth 12). After the winding wire 14 is wound on all the teeth 12 corresponding to the same phase and forms the coils 91 and 92, then a winding terminal end of the winding wire 14 is connected to a predetermined segment 15.

### First comparative example

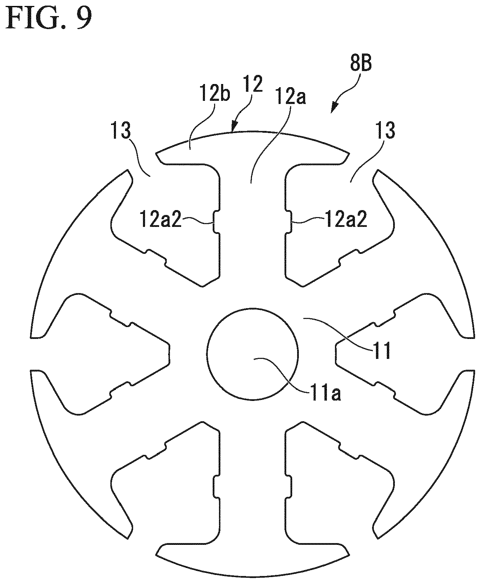

FIG. 9 is a view showing an armature core of a first comparative example not belonging to the invention, in an axial direction.

As shown in FIG. 9, in the armature core 8B, convex portions 12a2 are provided as regulating portions on both side surfaces of a winding drum portion 12a of each tooth 12 in a width direction. The convex portion 12a2 also has the same function as the step 12a1 of the first embodiment.

### Second comparative example

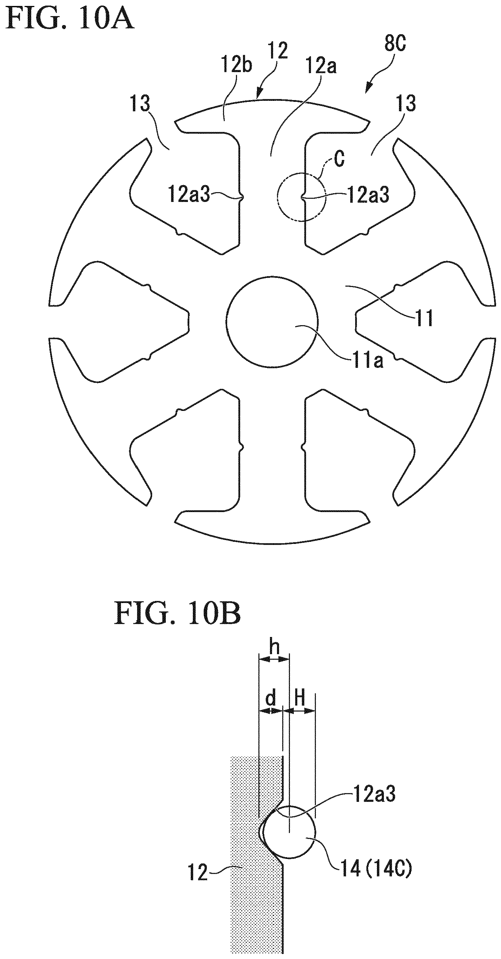

FIG. 10A is a view showing an armature core of a second comparative example not belonging to the invention and is a view showing the armature core in an axial direction. FIG. 10B is an enlarged view of a portion C of FIG. 10A.

As shown in FIG. 10A, in the armature core 8C, concave portions 12a3, to which a winding wire 14 forming a first-layer coil 91 is fitted, are provided as regulating portions on both side surfaces of a winding drum portion 12a of each tooth 12 in a width direction.

Further, as shown in FIG. 10B, the depth d of the concave portion 12a3 is set to be equal to or smaller than the radius h of the winding wire 14. According to the armature core 8C, when the winding wire 14 (14C) is fitted to the concave portions 12a3 that are formed on the winding surfaces, the winding wire 14C itself serves a role of the step of the first embodiment. For this reason, it is possible to prevent the positional deviation of the lowermost winding wires of the first-layer coil.

### (Second embodiment)

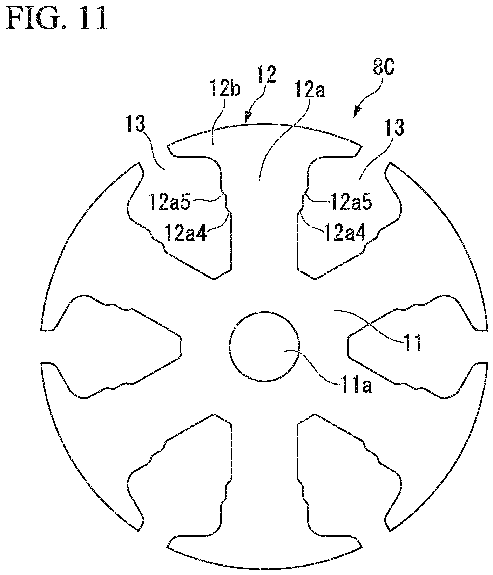

FIG. 11 is a view showing an armature core of a second embodiment of the invention in an axial direction.

As shown in FIG. 11, in the armature core 8D, first steps 12a4 and second steps 12a5 are provided as regulating portions in two steps on both side surfaces of a winding drum portion 12a of each tooth 12 in a width direction so that the positions of the steps deviate outward from the inside in the radial direction. In this case, the first step 12a4 functions to prevent the deviation of a first-layer coil 91, and the second step 12a5 functions to prevent the deviation of a second-layer coil 92.

### Third comparative example

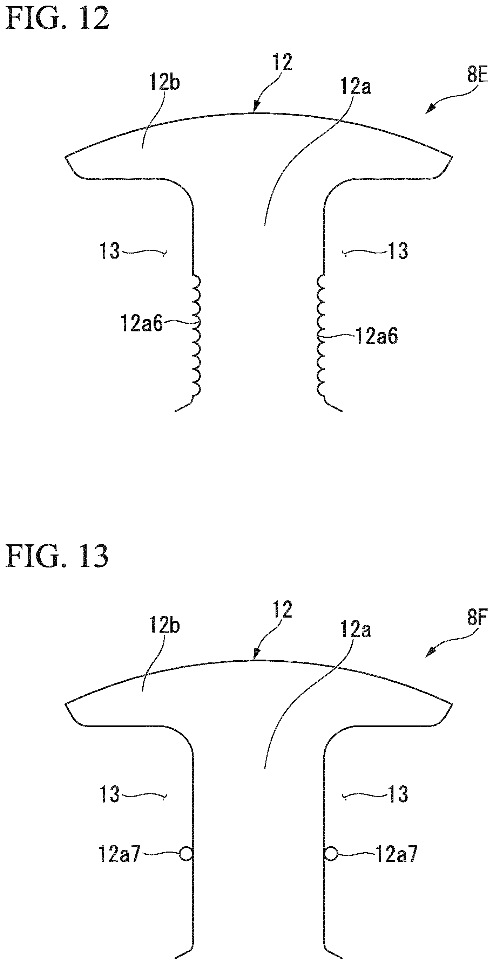

FIG. 12 is a view showing an armature core of a third comparative example not belonging to the invention in an axial direction.

As shown in FIG. 12, in the armature core 8E, a plurality of concave portions 12a6 having a size which allows the winding wire 14 (see FIG. 5) to be fitted thereto are continuously provided as regulating portions on both side surfaces of a winding drum portion 12a of each tooth 12 in a width direction. It is possible to obtain the same effect as the first embodiment by providing the plurality of concave portions 12a6 as described above.

### Fourth comparative example

FIG. 13 is a view showing an armature core of a fourth comparative example not belonging to the invention in an axial direction.

As shown in FIG. 13, in the armature core 8F, wire materials 12a7 having the same diameter as the winding wire 14 (see FIG. 5) are fixed to both side surfaces of a winding drum portion 12a of each tooth 12 in a width direction as a regulating portion by means, such as welding or adhesion. The wire materials 12a7 also has the same function as the step 12a1 of the first embodiment.

Meanwhile, the invention is not limited to the above-mentioned embodiments, and also includes various modifications of the above-mentioned embodiments as far as they do not depart from the scope of the invention, which is defined by the appended claims.

For example, cases in which the armature cores 8 and 8A to 8F of the motor 1 with a speed reducer used to drive the windshield wipers of an automobile are provided with various regulating portions for preventing the winding collapse of the winding wire 14 have been described in the above-mentioned embodiments. However, the invention is not limited to the embodiments, and the regulating portions of the above-mentioned embodiments can be applied to armature cores of various electric motors.

### Industrial Applicability

According to the armature core, the armature, and the electric motor, it is possible to prevent the winding collapse of coils when a plurality of coils are wound on each tooth. Accordingly, it is possible to improve the coil space factor of the armature and to improve the balance of the armature.

### Reference Signs List

- 1:: motor with speed reducer
- 2:: electric motor
- 8, 8A to 8F:: armature core
- 11:: core body
- 12:: teeth
- 12a:: winding drum portion
- 12a1:: step (regulating portion)
- 12a2:: convex portion (regulating portion)
- 12a3:: concave portion (regulating portion)
- 12a4:: first step (regulating portion)
- 12a5:: second step (regulating portion)
- 12a6:: concave portion (regulating portion)
- 12a7:: wire material (regulating portion)
- 14:: winding wire
- 91, 92, 93:: coil

## Claims

1. An armature (6) comprising:
an armature core (8A) comprising an annular core body (11) that is fixed to a rotationally shaft (3) and a plurality of teeth (12) that are provided on an outer periphery of the core body (11) and that radially extend outward in a radial direction of the core body (11), wherein each tooth (12) includes a winding drum portion (12a) that radially protrudes from the core body (11) in the radial direction and a flange portion (12b) that extends from the end of the winding drum portion (12a) in the circumferential direction and forms the outer periphery of the armature core (8A), each tooth (12) having an extending direction (L1) and a width direction perpendicular to the extending direction when seen in the direction of the shaft (3);
an armature coil (9) formed of two or three layers of coil (91, 92, 93) sequentially wound on the outer periphery of the winding drum portion (12a) of each tooth (12) in a concentrated winding manner, the winding wire (14) of at least a part of a first-layer coil (91) is wound so as to come into close contact with a winding surface of a base end side of a winding drum portion (12a), wherein a second-layer coil (92) is formed by winding the winding wire (14) over the previously wound first-layer coil (91) at a position closer to the outside in the radial direction so as to partially overlap the first-layer coil (91); and
a commutator (10) that is fixed to a side of the rotationally shaft (3), wherein a plurality of segments (15), which are made of a conductive material, are mounted on the outer peripheral surface of the commutator (10),
wherein during winding a winding start end (14a) of the winding wire (14) of the first-layer coil (91) starts to be wound from a first segment (15) of the plurality of segments (15) and a winding terminal end (14b) of the winding wire (14) of the first-layer coil (91) is connected to a second segment (15) of the plurality of segments (15) such that the first-layer coil (91) is formed between the first and second segments (15), and wherein the second-layer coil (92) is formed between two other segments (15) of the plurality of segments (15),
a regulating portion (12a1), which regulates the positional deviation of the winding wire (14) of the first-layer coil (91) in the extending direction of the tooth, is provided on at least a part of the winding surface of the winding drum portion (12a),
the regulating portion (12a1) is formed in a middle of the winding drum portion (12a) in the extending direction (L1) or at a position between the middle of the winding drum portion (12a) and the core body (11) in the extending direction,
the regulating portion (12a1) is formed by a step that is provided at an outward end part of the winding surface for the first-layer coil (91) in the extending direction,
with the step as a boundary, a height in the width direction of a relatively inward area of the winding surface of the winding drum portion (12a) is set to be lower than a height (H) in the width direction of a relatively outward area of the winding surface of the winding drum portion (12a), and
the winding wire (14) of the second-layer coil (92) is wound such that at least a part of the second-layer coil (92) is disposed on the relatively outward area of the winding surface of the winding drum portion (12a) and such that a part of the second-layer coil (92) overlaps the first-layer coil (91), and
in the relatively inward area, the winding wire (14) of the first-layer coil (91) comes into close contact with the winding drum portion (12a) and the step and the winding wire (14) of the second-layer coil (92) is spaced apart from the winding drum portion (12a).

2. The armature according to claim 1,
wherein the regulating portion (12al) is provided on at least one side surface of both side surfaces of the winding drum portion (12a) in a width direction when seen in an axial direction of the core body (11).

3. The armature according to claim 1 or 2,
wherein a difference in height of the step is set to be equal to or larger than a radius of the winding wire (14) that forms the coil.

4. An electric motor (1) comprising:
the armature (6) of any one of claims 1 to 3, and
a magnet (7) that generates a magnetic attractive force or a repelling force with respect to a magnetic field formed by the armature (6).

## Patentansprüche

1. Ein Anker (6) umfassend:
einen Ankerkern (8A) mit einem ringförmigen Kernkörper (11), der an einer Drehachse (3) befestigt ist und mit einer Vielzahl von Zähnen (12), die auf dem Außenumfang des Kernkörpers (11) vorgesehen sind und sich radial nach außen in radialer Richtung zum Kernkörper (11)erstrecken, wobei jeder Zahn (12) einen Wickelwalzenabschnitt (12a), der aus dem Kernkörper (11) in radialer Richtung radial hervorragt, und einen Flanschabschnitt (12b) enthält, der sich vom Ende des Wickelwalzenabschnitts (12a) aus in Umfangsrichtung erstreckt und den Außenumfang des Ankerkerns (8A) bildet, wobei jeder Zahn (12) dabei eine Längsrichtung (L1) und eine Breitenrichtung, senkrecht zur Längsrichtung, in Richtung der Achse gesehen hat;
eine Ankerspule (9), gebildet aus zwei oder drei Spulenschichten (91, 92, 93), die sequentiell, mit konzentrierter Wicklungsweise, auf den Außenumfang des Wickelwalzenabschnitts (12a) jedes Zahns (12) gewickelt sind, der Wickeldraht (14) mindestens eines Teils einer Spule der ersten Schicht (91) wird so gewickelt, dass er in engen Kontakt mit der Wicklungsfläche einer der Basisendseiten des Wickelwalzenabschnitts (12a) gewickelt wird, wobei die Spule der zweiten Schicht (92) dadurch gebildet wird, dass der Wickeldraht (14) über der zuvor gewickelten Spule der ersten Schicht (91) gewickelt wird, in einer Position, die in radialer Richtung weiter außen liegt, und so die Wicklungsfläche der Spule der ersten Schicht (91) zumindest teilweise überlappt; und
einen Kommutator (10), der an einer Seite der Drehachse (3) befestigt ist, wobei mehrere Segmente (15), die aus einem leitenden Material bestehen, auf der äußeren Umfangsfläche des Kommutators (10) montiert sind,
wobei während des Wickelns ein Wicklungsanfangsabschnitt (14a) des Wicklungsdrahtes (14) der Spule der ersten Schicht (91) zuerst ab einem ersten Segment (15) der zahlreichen Segmente (15) gewickelt wird und ein Wicklungsendabschnitt (14b) des Wicklungsdrahtes (14) der Spule der ersten Schicht (91) mit einem zweiten Segment (15) der zahlreichen Segmente (15) verbunden wird, so dass die Spule der ersten Schicht (91) zwischen den ersten und zweiten Segmenten (15) gebildet wird und wobei die Spule der zweiten Schicht (92) zwischen zwei anderen Segmenten (15) der zahlreichen Segmente (15) gebildet wird,
wobei ein Stufenabschnitt (12a1), der die Positionsabweichung des Wicklungsdrahtes (14) der Spule der ersten Schicht (91) in Längsrichtung des Zahns reguliert, auf mindestens einem Teil der Wicklungsfläche des Wickelwalzenabschnitts (12a) vorgesehen ist,
wobei der Stufenabschnitt (12a1) in der Mitte des Wickelwalzenabschnitts (12a) in Längsrichtung (L1),
oder an einer Position zwischen der Mitte des Wickelwalzenabschnitts (12a) und des Kernkörpers (11) in Längsrichtung gebildet ist,
wobei der Stufenabschnitt (12a1) aus einer Stufe besteht, die auf einem äußeren Endteil der Wicklungsfläche für die Spule der ersten Schicht (91) in Längsrichtung vorgesehen ist,
mit der Stufe als Grenze, eine Höhe in Breitenrichtung eines relativ einwärts liegenden Bereichs der Wicklungsfläche des Wickelwalzenabschnitts (12a) ist so ausgelegt, dass es niedriger liegt als eine Höhe (H) in Breitenrichtung eines relativ auswärts liegenden Bereichs der Wicklungsfläche des Wickelwalzenabschnitts (12a), und
der Wicklungsdraht (14) der Spule der zweiten Schicht (92) ist so gewickelt, dass zumindest ein Teil der Spule der zweiten Schicht (92) auf dem relativ auswärts liegenden Bereich der Wicklungsfläche des Wickelwalzenabschnitts (12a) angeordnet ist und so, dass ein Teil der Spule der zweiten Schicht (92) die Spule der ersten Schicht (91) überlappt, und
im relativ einwärts liegenden Bereich der Wicklungsdraht (14) der Spule der ersten Schicht (91) in engen Kontakt mit dem Wickelwalzenabschnitt (12a) kommt und die Stufe und der Wicklungsdraht (14) der Spule der zweiten Schicht (92) einen Abstand vom Wickelwalzenabschnitt (12a) haben.

2. Anker gemäß Anspruch 1,
wobei der Stufenabschnitt (12a1) zumindest an einer Seitenfläche der beiden Seitenflächen des Wickelwalzenabschnitts (12a) in einer Breitenrichtung, gesehen in der axialen Richtung des Kernkörpers (11) vorgesehen ist.

3. Anker gemäß Anspruch 1 oder 2,
wobei ein Höhenunterschied der Stufe so vorgesehen ist, dass er gleich oder breiter als ein Radius des Wicklungsdrahtes (14) ist, der die Spule bildet.

4. Elektromotor (1) umfassend:
den Anker (6) nach einem der Ansprüche 1 bis 3, und
einen Magneten (7), der eine magnetische Anziehungskraft oder eine Abstoßungskraft, bezogen auf das Magnetfeld, das vom Anker (6) gebildet wird, erzeugt.

## Revendications

1. Induit (6) comprenant :
un noyau d'induit (8A) comprenant un corps de noyau annulaire (11) qui est fixé à un arbre rotatif (3) et une pluralité de dents (12) qui sont prévues sur une périphérie externe du corps de noyau (11) et qui s'étendent radialement vers l'extérieur dans une direction radiale du corps de noyau (11), dans lequel chaque dent (12) inclut une portion tambour d'enroulement (12a) qui fait saillie radialement à partir du corps de noyau (11) dans la direction radiale et une portion bride (12b) qui s'étend à partir de l'extrémité de la portion tambour d'enroulement (12a) dans la direction circonférentielle et forme la périphérie externe du noyau d'induit (8A), chaque dent (12) ayant une direction d'extension (L1) et une direction de largeur perpendiculaire à la direction d'extension lorsqu'elle est vue dans la direction de l'arbre (3) ;
une bobine d'induit (9) formée de deux ou trois couches de bobine (91, 92, 93) enroulées séquentiellement sur la périphérie externe de la portion tambour d'enroulement (12a) de chaque dent (12) dans une configuration d'enroulement concentré, le fil d'enroulement (14) d'au moins une partie d'une bobine de première couche (91) est enroulé de façon à venir en contact étroit avec une surface d'enroulement d'un côté d'extrémité de base d'une portion tambour d'enroulement (12a), dans lequel une bobine de seconde couche (92) est formée par enroulement du fil d'enroulement (14) sur la bobine de première couche (91) préalablement enroulée au niveau d'une position plus proche de l'extérieur dans la direction radiale de façon à chevaucher partiellement la bobine de première couche (91) ; et
un commutateur (10) qui est fixé à un côté de l'arbre rotatif (3), dans lequel une pluralité de segments (15), qui sont faits d'un matériau conducteur, sont montés sur la surface périphérique externe du commutateur (10),
dans lequel durant l'enroulement une extrémité de début d'enroulement (14a) du fil d'enroulement (14) de la bobine de première couche (91) commence à être enroulée à partir d'un premier segment (15) de la pluralité de segments (15) et une extrémité de fin d'enroulement (14b) du fil d'enroulement (14) de la bobine de première couche (91) est connectée à un second segment (15) de la pluralité de segments (15) de telle manière que la bobine de première couche (91) est formée entre les premier et second segments (15), et dans lequel la bobine de seconde couche (92) est formée entre deux autres segments (15) de la pluralité de segments (15),
une portion de régulation (12a1), qui régule l'écart de position du fil d'enroulement (14) de la bobine de première couche (91) dans la direction d'extension de la dent, est prévue sur au moins une partie de la surface d'enroulement de la portion tambour d'enroulement (12a),
la portion de régulation (12a1) est formée dans un milieu de la portion tambour d'enroulement (12a) dans la direction d'extension (L1) ou au niveau d'une position entre le milieu de la portion tambour d'enroulement (12a) et le corps de noyau (11) dans la direction d'extension,
la portion de régulation (12a1) est formée par un étage qui est prévu au niveau d'une partie d'extrémité vers l'extérieur de la surface d'enroulement pour la bobine de première couche (91) dans la direction d'extension, avec l'étage en tant que limite, une hauteur dans la direction de largeur d'une zone relativement vers l'intérieur de la surface d'enroulement de la portion tambour d'enroulement (12a) est réglée de façon à être inférieure à une hauteur (H) dans la direction de largeur d'une zone relativement vers l'extérieur de la surface d'enroulement de la portion tambour d'enroulement (12a), et
le fil d'enroulement (14) de la bobine de seconde couche (92) est enroulé de telle manière qu'au moins une partie de la bobine de seconde couche (92) est disposée sur la zone relativement vers l'extérieur de la surface d'enroulement de la portion tambour d'enroulement (12a) et de telle manière qu'une partie de la bobine de seconde couche (92) chevauche la bobine de première couche (91), et
dans la zone relativement vers l'intérieur, le fil d'enroulement (14) de la bobine de première couche (91) vient en contact étroit avec la portion tambour d'enroulement (12a) et l'étage et le fil d'enroulement (14) de la bobine de seconde couche (92) est espacé de la portion tambour d'enroulement (12a).

2. Induit selon la revendication 1,
dans lequel la portion de régulation (12a1) est prévue sur au moins une surface latérale des deux surfaces latérales de la portion tambour d'enroulement (12a) dans une direction de largeur lorsqu'elle est vue dans une direction axiale du corps de noyau (11).

3. Induit selon la revendication 1 ou 2,
dans lequel une différence de hauteur de l'étage est réglée de façon à être supérieure ou égale à un rayon du fil d'enroulement (14) qui forme la bobine.

4. Moteur électrique (1) comprenant :
l'induit (6) selon l'une quelconque des revendications 1 à 3, et
un aimant (7) qui génère une force attractive ou une force répulsive magnétique par rapport à un champ magnétique formé par l'induit (6).
